# EUROPEAN PATENT APPLICATION

(11) **EP 1 975 138 A1**
(43) Date of publication of application: **01.10.2008**
(21) Application number: 07020068.8
(22) Date of filing: 12.10.2007
(51) Int. Cl.: C04B 35/565, C04B 38/00

(54) **Method for manufacturing porous silicon carbide sintered body**

(30) Priority: 30.03.2007 WO PCT/JP2007/057276
(71) Applicant: IBIDEN CO., LTD., Ogaki-shi Gifu 503-8604 (JP)
(72) Inventor: Takamatsu, Shoji, Ibigawacho, Ibi-gun Gifu 501-0695 (JP)
(74) Representative: HOFFMANN EITLE

(57) **Abstract**

It is an object of the present invention to provide a method for manufacturing a porous silicon carbide sintered body having a desired pore diameter with reduced fluctuations, and the method for manufacturing a porous silicon carbide sintered body comprises the steps of: manufacturing a silicon carbide molded body by using a raw material composition containing at least silicon carbide powder, silicon powder, and a binder; carrying out a degreasing treatment on the silicon carbide molded body to manufacture a silicon carbide degreased body; and carrying out a firing treatment on the silicon carbide degreased body to manufacture a porous silicon carbide sintered body, the raw material composition having 1 to 3% by weight of the total amount of the silicon carbide powder and the silicon powder in a content of the silicon powder, and the firing treatment being carried out at a temperature allowing silicon carbide powder to mutually form intergranular necks through counter diffusion.

## Description

### TECHNICAL FIELD

The present invention relates to a method for manufacturing a porous silicon carbide sintered body.

### BACKGROUND ART

In recent years, particulates such as soot contained in exhaust gases discharged from internal combustion engines of vehicles such as buses and trucks, and construction machines have raised serious problems as contaminants harmful to the environment and the human body.
For this reason, various honeycomb filters, which use a honeycomb structured body made of a porous silicon carbide sintered body, have been proposed as filters that collect particulates in exhaust gases and purify the exhaust gases.

Such a porous silicon carbide sintered body can be manufactured by using, for example, a method disclosed in Patent Document 1.
That is, first, a raw material composition is prepared by mixing silicon carbide powder, a binder, a dispersant solution and the like, and after this raw material composition has been continuously extrusion-molded, a molded body thus extruded is cut into a predetermined length so that a rectangular pillar-shaped silicon carbide molded body is manufactured.

Next, the resulting silicon carbide molded body is dried by using a microwave drying apparatus or a hot-air drying apparatus; then, after predetermined cells have been sealed so that either one of the ends of each cell has been sealed, this silicon carbide molded body undergoes a degreasing treatment and a firing treatment. Thus, a porous silicon carbide sintered body can be manufactured.

Here, Patent Document 2 has disclosed a method for manufacturing a honeycomb structured body in which metallic silicon and an organic binder are added to and mixed with a material of refractory particles such as SiC, and this is kneaded so that the resulting clay (raw material) is molded into a honeycomb shape; then, after the molded body thus obtained has been calcinated so that the organic binder in the molded body has been removed, the resulting molded body undergoes a main firing process.
Moreover, in the paragraph [0037] of Patent Document 2, it is disclosed that the addition amount of metallic silicon is 5 to 50% by weight to the total amount of the refractory particles and metallic silicon, and that when the amount is less than 5% by weight, it is not possible to obtain sufficient strength needed for maintaining a structured body with thin walls, such as a honeycomb structured body.
Patent Document 1: JP-A 2004-188278
Patent Document 2: JP-A 2002-201082

### DISCLOSURE OF THE INVENTION PROBLEMS TO BE SOLVED BY THE INVENTION

In a porous silicon carbide sintered body to be used as a filter for purifying exhaust gases, presumably, the pore diameter is desirably 10 to 15 µm from the viewpoints of surely collecting particulates and of reducing the pressure loss.
In the case where the porous silicon carbide sintered body is manufactured by the manufacturing method described in Patent Document 1, the sintering property of the silicon carbide tends to vary to fail to form a desired pore diameter in the porous silicon carbide sintered body after the firing process, causing the problems that the pore diameter becomes too large and that fluctuations occur in the pore diameter.

The present inventors have examined the reasons for the above-mentioned problems and have found the following reasons.
That is, when a porous silicon carbide sintered body is manufactured, carbon and silica are normally contained in silicon carbide powder forming a material as impurities. During the sintering process, the reaction between carbon and silica, indicated by the following chemical equation (1), proceeds to the right.

[Equation 1]

C+SiO₂⇆SiO↑+CO↑ (1)

Moreover, in the case where excessive carbon is present, the reaction between silicon monoxide and carbon, indicated by the following chemical equation (2), proceeds to the right. Normally, when, in the firing treatment, a silicon carbide degreased body, placed in a firing jig, is heated, since a firing jig made from a carbon material is used as a firing jig, an excessive amount of carbon is present in the firing system.

[Equation 2]

SiO↑+2C⇆SiC+CO↑ (2)

When the reactions in the chemical equations (1) and (2) proceed to the right in this manner, the partial pressure of CO in the firing atmosphere increases, while the partial pressure of SiO is low in its increasing rate or reduced. In other words, the ratio (P_{SIO}/P_{CO}) of the partial pressure of SiO to the partial pressure of CO in the firing atmosphere varies.

For example, when the CO partial pressure in the firing atmosphere increases, the reaction between silicon carbide in the degreased body and carbon monoxide in the firing atmosphere, indicated by the following chemical equation (3), presumably proceeds to the right, failing to sufficiently increase the pore diameter, or causing the pore diameter to become too large. That is, fluctuations in the pore diameter become greater.

[Equation 3]

SiC+CO↑⇆SiO↑+2C (3)

The reason for this is described as follows. That is, in the case where a porous silicon carbide sintered body is manufactured by the method, intergranular necks are formed due to the counter diffusion among silicon carbide powder, and gaps left among grains form pores so that the porous silicon carbide sintered body is manufactured. When the reaction in the chemical equation (3) proceeds to the right, presumably, (i) formation of the intergranular necks is interrupted due to decomposition of the silicon carbide powder as the material, failing to sufficiently increase the pore diameter; (ii) the intergranular necks thus formed tend to be decomposed to cause the pore diameter to become too large; and (iii) these interruption in forming the intergranular necks and decomposition of the intergranular necks simultaneously proceed, with the result that fluctuations in the pore diameter become greater.
Moreover, as the firing temperature becomes higher, the counter diffusion among silicon carbide powder proceeds more easily. Therefore, although the intergranular necks are more easily formed, the reaction of the chemical equation (3) proceeds to the right more easily, with the result that the pore diameter tends to become greater.

### MEANS FOR SOLVING THE PROBLEMS

Consequently, present inventors have studied further to complete a method for manufacturing a porous silicon carbide sintered body that can solve the problems.
The invention according to claim 1 relates to a method for manufacturing a porous silicon carbide sintered body, comprising the steps of: manufacturing a silicon carbide molded body by using a raw material composition containing at least silicon carbide powder, silicon powder, and a binder; carrying out a degreasing treatment on the silicon carbide molded body to manufacture a silicon carbide degreased body; and carrying out a firing treatment on the silicon carbide degreased body to manufacture a porous silicon carbide sintered body, the raw material composition having 1 to 3% by weight of the total amount of the silicon carbide powder and the silicon powder in a content of the silicon powder, and the firing treatment being carried out at a temperature allowing silicon carbide powder to mutually form intergranular necks through counter diffusion.

In accordance with the invention described in claim 1, 1 to 3% by weight of silicon powder to the total amount of the silicon carbide powder and the silicon powder is contained in the raw material composition, and since the firing treatment is carried out at a temperature allowing the silicon carbide powder to mutually form intergranular necks through the counter diffusion, it is possible to manufacture a porous silicon carbide sintered body having a desired pore diameter with reduced fluctuations in the firing treatment.
The reason for this is presumably that, in the case where 1 to 3% by weight of silicon powder is contained in the raw material composition, even if the reaction in the chemical equations (1) and (2) proceed to the right to cause an increase in the CO partial pressure in the firing atmosphere, the reaction between carbon monoxide and silicon, indicated by the following chemical equation (4), is allowed to proceed to the right so that carbon monoxide in the firing atmosphere is consumed to restrain the reaction in the chemical equation (3) from proceeding to the right; therefore, it is possible to suppress variations in the ratio (P_{SiO}/P_{CO}) of the partial pressure of SiO to the partial pressure of CO in the firing atmosphere. Thus, it is possible to reduce changes in the average pore diameter relative to changes in the firing temperature, and consequently to manufacture a porous silicon carbide sintered body that has a desired pore diameter with reduced fluctuations.

[Equation 4]

CO↑+2Si⇆SiO↑+SiC (4)

In contrast, when the amount of the silicon powder is out of the range, the pore diameter may not be sufficiently greater, a pore diameter may be too large, or fluctuations in the pore diameter may occur. The reasons for these are presumably that the amount of the silicon powder of less than 1% by weight fails to sufficiently suppress an increase in the CO partial pressure in the firing atmosphere and that the amount of the silicon powder of more than 3% by weight allows more silicon powder to intrude into gaps among the silicon carbide powder, with the result that contacts among the silicon carbide powder are physically interrupted and that the formation of intergranular necks is consequently interrupted.
Moreover, in the case where the firing temperature is not so high as to form intergranular necks through the counter diffusion among mutual silicon carbide powder, the sintering process of silicon carbide is less likely to proceed.
In the present invention, the counter diffusion refers to "grain boundary diffusion" and means that the grain boundary of the SiC crystal is formed by neck portions among the grains so that a sintered body of silicon carbide is formed.

As described above, Patent Document 2 has disclosed a method for manufacturing a honeycomb structured body by using a composition formed by adding metallic silicon and an organic binder to SiC particles. The honeycomb structured body manufactured by the manufacturing method disclosed in Patent Document 2 has a structure in which SiC particles are mutually bonded to one another by metallic silicon.
In contrast, a porous silicon carbide sintered body to be manufactured by the invention described in claim 1 is not a fired body in which, as clearly indicated by the fact that the amount of metallic silicon contained in the raw material composition is small, silicon carbide particles are not combined with one another by metallic silicon, but a porous silicon carbide sintered body made from silicon carbide particles that are grain-grown by the sintering treatment; therefore, the porous silicon carbide sintered body manufactured by the invention described in claim 1 is completely different from the honeycomb structured body manufactured by the manufacturing method disclosed in Patent Document 2.
Consequently, the manufacturing method described in claim 1 and the manufacturing method disclosed by Patent Document 2 are originally based upon different technical ideas, and the structures and the effects thereof are also different from each other.

In the invention described in claim 2, which relates to the invention disclosed in claim 1, the firing treatment is carried out at a firing temperature of 2200 to 2300°C.
In accordance with the invention described in claim 2, since the firing temperature is 2200 to 2300°C, it is possible to surely manufacture a porous silicon carbide sintered body that has a desired pore diameter with reduced fluctuations.
In the case of the firing temperature of less than 2200°C, the sintering process of silicon carbide powder is less likely to proceed; on the other hand, in the case of the firing temperature of more than 2300°C, the sintering process of silicon carbide powder tends to proceed excessively, and electric power consumption increases and causes an economic disadvantage.

### BEST MODE FOR CARRYING OUT THE INVENTION

### (First Embodiment)

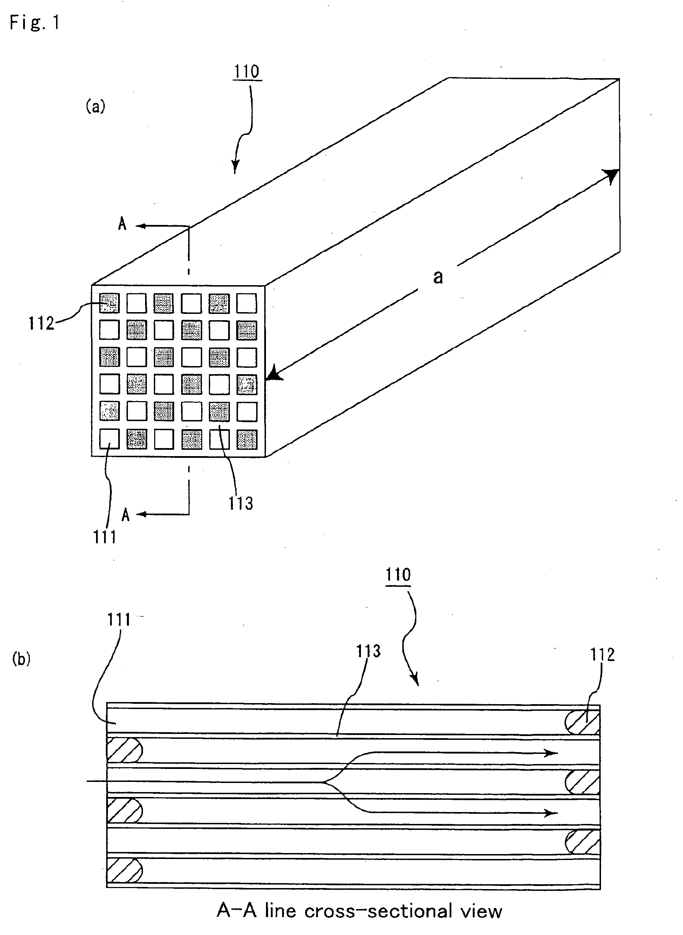

In the order of manufacturing processes, the following description will discuss a first embodiment, one embodiment of the present invention.
In the first embodiment, a porous silicon carbide sintered body shown in Figs. 1(a) and 1(b) is manufactured.
Fig. 1(a) is a perspective view that schematically shows one example of a porous silicon carbide sintered body to be manufactured by a manufacturing method of the present invention, and Fig. 1 (b) is an A-A line cross-sectional view of Fig. 1 (a).
As shown in Fig. 1(a), a porous silicon carbide sintered body 110 has a structure in which a large number of cells 111 are disposed in parallel with one another in a longitudinal direction (the direction shown by an arrow a in Fig. 1 (a) ) , and a cell wall 113 that separates the cells 111 is allowed to function as a filter.

That is, as shown in Fig. 1(b), each of the cells 111, formed in the porous silicon carbide sintered body 110, is sealed with a plug 112 at either one of the ends on its exhaust-gas inlet side and outlet side so that exhaust gases that have flowed into one cell 111 is discharged from another cell 111 after having always passed through the cell wall 113 that separates the cells 111; thus, when the exhaust gases pass through the cell wall 113, particulates are captured by the cell wall 113 portion so that the exhaust gases are purified.

(Process 1) First, 100 parts by weight of silicon carbide powder having an average particle diameter (D50) of 0.3 to 50 µm, 5 to 65 parts by weight of silicon carbide powder having an average particle diameter (D50) of 0.1 to 1.0 µm, silicon powder having an average particle diameter (D50) of 0.3 to 10 µm, and 1 to 10 parts by weight of a binder, such as methylcellulose, added to 100 parts by weight of silicon carbide powder, are mixed by a wet mixing machine so that mixed powder is prepared. In this case, the silicon powder is mixed so that its content is set to 1 to 3% by weight of the total amount of the silicon carbide powder and the silicon powder.
Here, in the present specification, the average particle diameter (D50) refers to a median diameter based upon volume.

Next, separately, a liquid mixture is prepared by mixing a plasticizer, a lubricant and water, and the mixed powder and the liquid mixture are mixed by using a wet mixing machine so that a raw material composition is prepared.

(Process 2) The raw material composition is extrusion-molded by using an extrusion-molding machine. Thus, an elongated body of the silicon carbide molded body, obtained by the extrusion molding, is cut into a predetermined length by using a metal wire so that a silicon carbide molded body having approximately the same shape as the rectangular pillar-shaped porous silicon carbide sintered body 110 shown in Fig. 1 (a) , with ends of cells being not sealed, is manufactured.
Thereafter, the silicon carbide molded body is dried by using a drying apparatus in which microwaves and hot air are used in combination.

(Process 3) A predetermined amount of a plug material paste that forms plugs is injected into either one of the ends of each cell of the silicon carbide molded body so that the cells are sealed.
With respect to the plug material paste, such a paste that allows plugs, which are formed through the post process to have a porosity of 30 to 75% is desirably used, and for example, the same material as the raw material composition may be used.

(Process 4) The silicon carbide molded body with either one of the ends of each cell being filled with the plug material paste is placed on a degreasing jig, and undergoes a degreasing process at a degreasing temperature of 250 to 390°C in an atmosphere of an O₂ concentration of 5 to 13% by volume so that a silicon carbide degreased body is manufactured.
Here, a plate-shaped degreasing jig made from carbon is used as a degreasing jig. The degreasing jig refers to a jig in which the silicon carbide molded body is placed so that the silicon carbide molded body is degreased.

(Process 5) The silicon carbide degreased body is placed on a firing jig, and undergoes a firing process in an argon atmosphere, for example, at 2200°C that corresponds to a temperature allowing silicon carbide powder to mutually form intergranular necks through counter diffusion so that a porous silicon carbide sintered body shown in Figs. 1(a) and 1(b) is completed.

The following description will discuss the firing jig to be used in more detail.

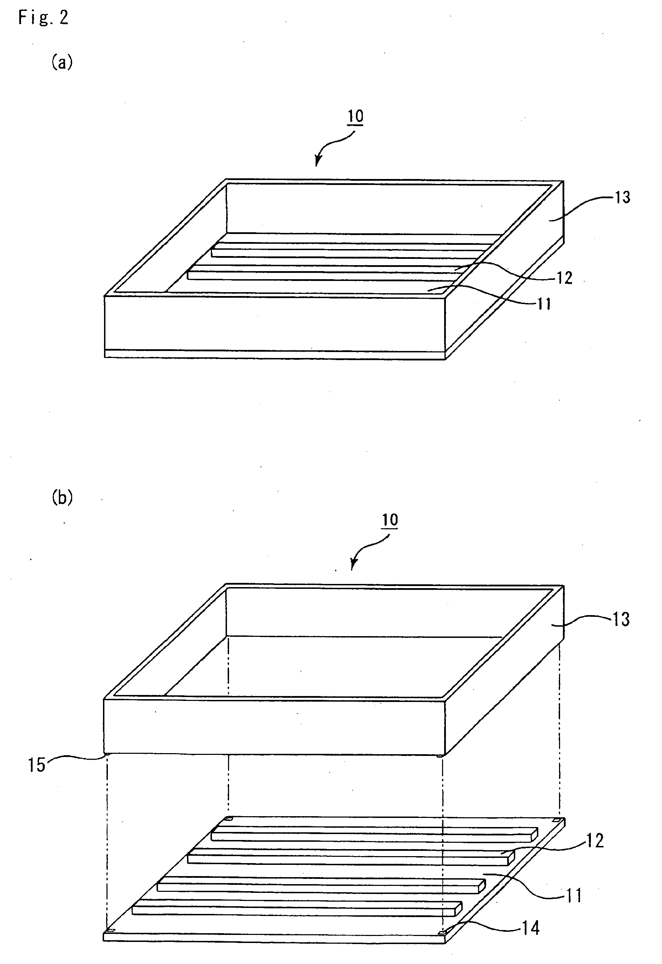

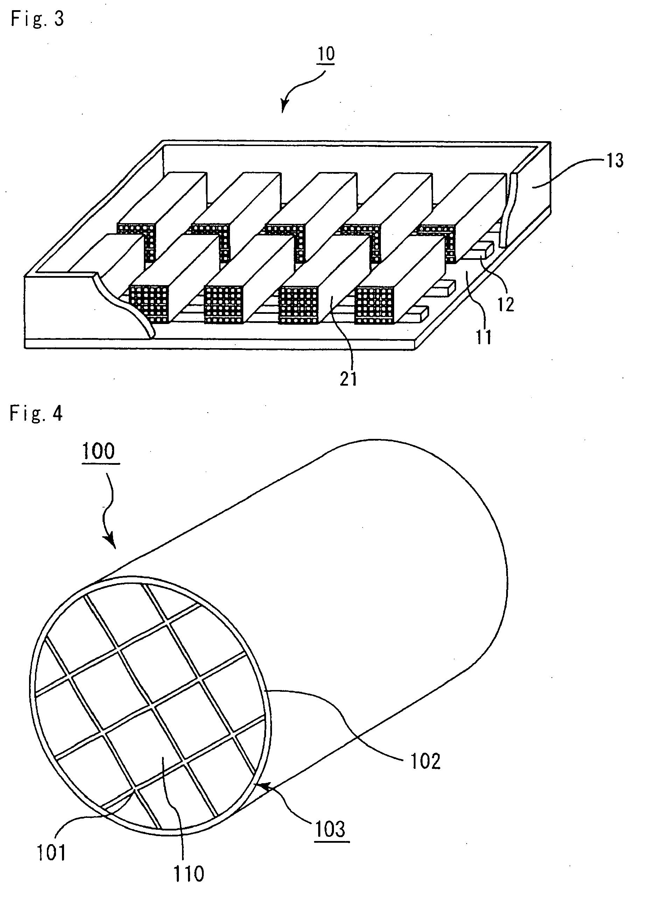

Fig. 2 (a) is a perspective view that schematically shows one example of a firing jig to be used in a method for manufacturing a porous silicon carbide sintered body of the present invention, and Fig. 2 (b) is an exploded perspective view of the firing jig shown in Fig. 2(a). Fig. 3 is a partially cut-out perspective view that schematically shows a state in which silicon carbide degreased bodies are placed in the firing jig shown in Fig. 2 (a). In Fig. 3, one portion of the side wall is omitted so as to easily determine the placed state of the silicon carbide degreased body.

A firing jig 10 shown in Fig. 2(a) is made from carbon and has a box shape with its upper face being open, and four spacers 12, which are made from carbon and used for mounting the silicon carbide degreased body, are placed on a bottom plate 11.

As shown in Fig. 2 (b), the firing jig 10 of Fig. 2 (a) can be separated into the bottom plate 11 and a side wall member 13, and when used as the firing jig 10, by fitting projected portions 15 formed on the four corners of the bottom face of the side wall member 13 into through holes 14 formed on the four corners of the bottom plate 11, the bottom plate 11 and the side wall member 13 are integrated so that the box-shaped firing jig 10 with its upper face being open is formed.

In the process 5, upon placing silicon carbide degreasing bodies 21 in the firing jig 10, ten silicon carbide degreased bodies 21 are placed on the spacers 12 with equal intervals, as shown in Fig. 3.
In this case, each of the silicon carbide degreased bodies 21 is placed on two of the spacers 12.

Moreover, the bottom plate 11, which forms one portion of the firing jig as shown in Figs. 2 (a) and 2 (b), is also used as a degreasing jig upon the degreasing treatment.
Therefore, upon carrying out the processes 4 and 5, first, a silicon carbide molded body is placed on the bottom plate 11 by interposing the spacers 12, and undergoes the degreasing treatment, and upon completion of the degreasing treatment, the side wall member 13 is attached to the bottom plate 11 without moving the silicon carbide degreased body from the degreasing jig, and a firing treatment is carried out in this state.

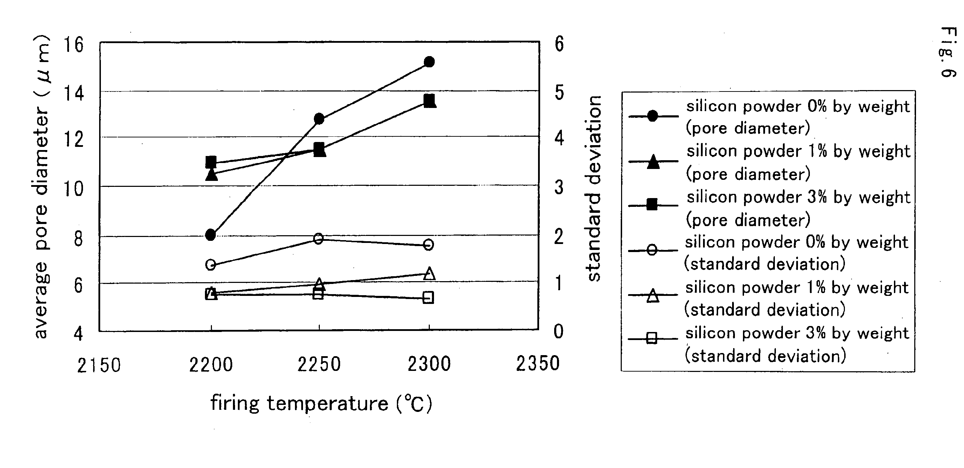

The following description will collectively discuss effects of the method for manufacturing the porous silicon carbide fired body in accordance with the present embodiment. (1) Since a predetermined amount of silicon powder is blended in a raw material composition, the sintering of the silicon carbide surely proceeds during a firing treatment so that it is possible to manufacture a porous silicon carbide sintered body having a desired pore diameter with reduced fluctuations. The reason for this is that the changes (inclination in Fig. 6) in the average pore diameter in response to changes in the firing temperature can be minimized. (see Fig. 6).

(2) Since silicon powder having an average particle diameter of 0.3 to 10 µm is used as the silicon powder, variations in the ratio (P_{SiO}/P_{CO}) of the partial pressure of SiO to the partial pressure of CO can be surely suppressed.
In contrast, in the case where the silicon powder has an average particle diameter of less than 0.3 µm, the silicon powder is easily oxidized so that a SiO₂ film is formed on the surface of the silicon powder; therefore, the reaction shown in the chemical equation (1) easily proceeds to the right, likely leading to an increase in the CO partial pressure. On the other hand, when the average particle diameter of the silicon powder is more than 10 µm, the silicon powder functions like a pore-forming agent, sometimes resulting in a reduction in the strength of the manufactured porous silicon carbide sintered body.

(3) Since two kinds of silicon carbide powders having different average particle diameters (D50) are used as silicon carbide powder, and since the particle diameter of the material powder has a great influence on the crystal structure of the porous silicon carbide sintered body to be manufactured, it is possible to adjust the average pore diameter of the porous silicon carbide sintered body to be manufactured, by appropriately selecting the average particle diameter of the respective silicon carbide powders.

(4) Since the degreasing treatment is carried out at a degreasing temperature of 250 to 390°C with an O₂ concentration of 5 to 13% by volume in an atmosphere, the residual amount of carbon (residual carbon amount) in the silicon carbide degreased body is set to a desired range (0.5 to 1.0% by weight) so that a porous silicon carbide sintered body that is superior in strength can be manufactured through the succeeding firing treatment.

Here, in the case where the degreasing temperature is less than 250°C, or in the case where the O₂ concentration in the atmosphere is less than 5% by volume, a binder, a plasticizer and a lubricant are less likely to be decomposed and removed to cause an excessive increase in the residual carbon amount in the silicon carbide degreased body. In the case where the degreasing temperature is more than 390°C or in the case where the O₂ concentration in the atmosphere is more than 13% by volume, the binder, the plasticizer and the lubricant are approximately completely decomposed and removed to make the residual carbon amount of the silicon carbide degreased body too small.
For this reason, by carrying out the degreasing process under the conditions, and by subsequently carrying out a firing process, it is possible to manufacture a porous silicon carbide sintered body that is superior in strength.

(5) Since the firing jig that can be separated into a bottom plate and a side wall member is used, and since the bottom plate is also used as the degreasing jig, it is not necessary to individually move the silicon carbide degreased body upon shifting from the degreasing treatment to the firing treatment so that damages or the like hardly occur in the silicon carbide degreased body that is inferior in strength.

(6) In the porous silicon carbide sintered body manufactured in the present embodiment, a great number of cells 111 are disposed in parallel with one another in the longitudinal direction (the direction shown an arrow a in Fig. 1(a)), with either one of the ends of each cell 111 being sealed with a plug 112; therefore, exhaust gases that have flowed into one cell 111 is discharged from another cell 111 after always having passed through the cell wall 113 that separates the cells 111 so that the porous silicon carbide sintered body can be desirably used as a DPF (diesel particulate filter).

The following description will discuss Examples that specifically disclose the first embodiment of the present invention.

### (Example 1)

An amount of 70 kg of α-type silicon carbide powder having an average particle diameter of 20 µm, 29kg of α-type silicon carbide powder having an average particle diameter of 0.5 µm, 20 kg of an organic binder (methylcellulose) and 1 kg of silicon powder having an average particle diameter of 3 µm (made by Kanto Metal Corporation) were mixed by using a wet mixing machine so that mixed powder was prepared.
Next, separately, 12 kg of a lubricant (UNILUB, made by NOF Corporation), 5 kg of a plasticizer (glycerin) and 65 kg of water were mixed to prepare a liquid mixture, and this liquid mixture and the mixed powder were mixed by using a wet mixing machine so that a raw material composition was prepared.
In this raw material composition, the content of silicon powder to the total amount of silicon carbide powder and silicon powder was 1% by weight.

Next, the raw material composition was charged into an extrusion molding machine equipped with a die used for extrusion-molding it into a honeycomb shape, and was continuously extrusion-molded into a silicon carbide molded body having the honeycomb shape through the die. Thereafter, the elongated body of the silicon carbide molded body having the honeycomb shape, thus extrusion-molded, was cut into a predetermined length, by using a metal wire made of SUS and coated with nylon on the periphery thereof; thus, a silicon carbide molded body, which had the same shape as the shape shown in Figs. 1 (a) and 1 (b) except that ends of cells were not sealed, was manufactured.

Next, the silicon carbide molded body was dried by using a drying apparatus in which microwaves and hot air were used in combination, and a plug material paste having the same composition as the raw material composition was then injected into predetermined cells, and this was again dried by using the drying apparatus.
Next, a plate-shaped degreasing jig made from carbon (bottom plate 11 shown in Fig. 3) was prepared, and ten silicon carbide molded bodies to which the plug material paste had been injected were placed on the degreasing jig, by interposing spacers made from carbon.
By carrying out the degreasing process under conditions of a degreasing temperature of 350°C, an O₂ concentration of 9% by volume in the atmosphere and a degreasing period of time of 3 hours, a silicon carbide degreased body was manufactured.

Subsequently, the side wall member 13 was attached to the bottom plate 11 with the silicon carbide degreased bodies being placed thereon to prepare a firing jig 10 (see Figs. 2 (a) and Fig. 3), and this was fired at 2200°C in an argon atmosphere under normal pressure for 3 hours so that a porous silicon carbide sintered body, which had a porosity of 40 %, a size of 34.3 mm x 34.3 mm x 254 mm, the number of cells (cell density) of 46.5 pcs/cm² and a thickness of each cell wall of 0.25 mm, was manufactured.

### (Example 2, Comparative Examples 1 and 2)

A porous silicon carbide sintered body was manufactured in the same manner as in Example 1, except that the amount of silicon powder to be blended in the raw material composition was changed as shown in Table 1.
In the raw material compositions, the contents of silicon powder to the total amount of silicon carbide powder and silicon powder were 3% by weight in Example 2, 0% by weight in Comparative Example 1 and 6% by weight in Comparative Example 2, respectively.

### (Evaluation of porous silicon carbide sintered body)

### (1) Evaluation on bending strength

The three-point bending strength test was conducted in the following method on the porous silicon carbide sintered bodies manufactured by the methods shown in Examples 1 and 2, and Comparative Examples 1 and 2. Table 1 shows the results.
That is, referring to JIS R 1601, the three-point bending test was conducted under conditions of a span distance of 227 mm and a speed of 1 mm/min, by using an Instron 5582 so that the bending strength (MPa) of each of the porous silicon carbide sintered bodies was measured.
Here, the number of the samples was 14 pcs and the results were given as an average value of the 14 samples.

### (2) Measurement of average pore diameter

The average pore diameter and the standard deviation of pore diameters were measured in the following method on the porous silicon carbide sintered bodies manufactured by the methods shown in Examples 1 and 2, and Comparative Examples 1 and 2. Table 1 shows the results.
That is, referring to JIS R 1655, the center portion of each of 14 porous silicon carbide sintered bodies was cut into a cube with a width of 1 cm to prepare samples, and by using a fine-pore distribution measuring device (AutoPore III9405, made by Shimadzu Corporation) in which a mercury porosimetry is employed, the fine-pore distribution was measured through the mercury porosimetry in a range of the fine-pore diameter of 0.2 to 500 µm, and the average fine-pore diameter at this time was calculated as (4V/A) so that the average fine-pore diameter and the standard deviation in pore diameters were calculated.

**[Table 1]**

| | Silicon carbide powder | | Silicon powder | | Firing temperature | Average pore diameter | Standard deviation | Bending strength |
|---|---|---|---|---|---|---|---|---|
| | Particle diameter 20 µm | Particle diameter 0.5 µm | Particle diameter 3 µm | Content (note) | (°C) | (µm) | (µm) | (MPa) |
| | (kg) | (kg) | (kg) | (% by weight) | | | | |
| Example 1 | 70 | 29 | 1 | 1 | 2200 | 10.5 | 0.78 | 31 |
| Example 2 | 70 | 27 | 3 | 3 | 2200 | 11.0 | 0.74 | 30 |
| Comparative Example 1 | 70 | 30 | 0 | 0 | 2200 | 8.0 | 1.38 | 29 |
| Comparative Example 2 | 70 | 24 | 6 | 6 | 2200 | 10.0 | 0.33 | 26 |

| | | | | | | | | |
|---|---|---|---|---|---|---|---|---|
| (Note) Content represents the content of silicon powder to the total amount of silicon carbide powder and silicon powder. | | | | | | | | |

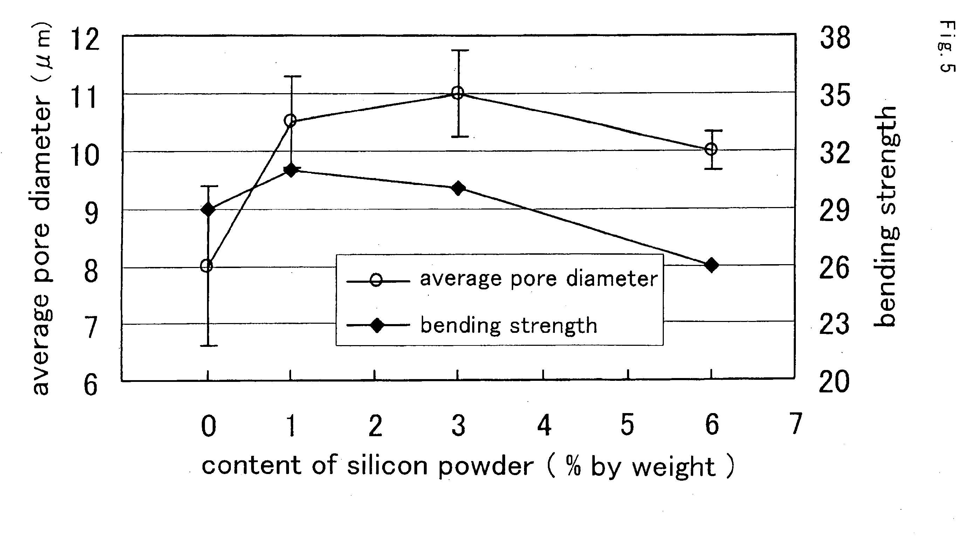

Fig. 5 is a graph that shows the relationship between a content of silicon powder (content of silicon powder to the total amount of silicon carbide powder and silicon powder), and an average pore diameter and a bending strength, with respect to Examples 1 and 2 and Comparative Examples 1 and 2.
Table 1 and Fig. 5 clearly show that, in the raw material composition, when the content of silicon powder is set to 1 to 3% by weight of the total amount of silicon carbide powder and silicon powder (Examples 1 and 2), fluctuations become smaller and a porous silicon carbide sintered body having a pore diameter of 10 to 15 µm and a bending strength of more than 30 MPa can be manufactured.
In contrast, it has become apparent that in the case where, as shown in Comparative Example 1, no silicon powder is blended in the raw material composition, the pore diameter is not allowed to become sufficiently large, and fluctuations in the pore diameter become large. The reason for this is presumed as described earlier.
Moreover, it has become apparent that in the case where, as shown in Comparative Example 2, more than 3% by weight (6% by weight) of silicon powder is blended therein, although the pore diameter is set to a desired size, the manufactured porous silicon carbide sintered body is inferior in bending strength. The reason for this is also presumed as described earlier.

### (Second Embodiment)

In this embodiment, the firing treatment was carried out by setting the firing temperature in Process 5 of the first embodiment in a range of 2200 to 2300°C.
In the case of the firing temperature of less than 2200°C, the sintering of silicon carbide powder tends not to proceed; in contrast, in the case of the firing temperature of more than 2300°C, the sintering process of silicon carbide powder tends to proceed excessively. Moreover, since the power consumption increases, this state is disadvantageous from the economic viewpoint. However, the firing temperature is 2200 to 2300°C, it is possible to manufacture a porous silicon carbide sintered body having a desired pore diameter with reduced fluctuations.
Here, also in the present embodiment, the same effects as those of (1) to (6) of the first embodiment can be obtained.

The following description will discuss Examples that more specifically disclose the second embodiment of the present invention.

### (Examples 3 to 6, Comparative Examples 3 to 5)

A porous silicon carbide sintered body was manufactured in the same manner as in Example 1, except that at least one of the amount of silicon powder to be blended in the raw material composition and the firing temperature were changed as shown in Table 2.
In the raw material composition, the contents of silicon powder to the total amount of silicon carbide powder and silicon powder were 1% by weight in Examples 3 and 4, 3% by weight in Examples 5 and 6, 0% in Comparative Examples 3 and 4, and 3% by weight in Comparative Example 5, respectively.

### (Evaluation on porous silicon carbide sintered body)

With respect to each of the porous silicon carbide sintered bodies manufactured by methods shown in Examples 3 to 6 and Comparative Examples 3 to 5, the bending strength was evaluated, and the average pore diameter and the standard fluctuation of pore diameters were measured by using the methods.
Table 2 shows the results. Here, the results of Examples 1 and 2 and Comparative Example 1 are also added to Table 2 for reference.

**[Table 2]**

| | Silicon carbide powder | | Silicon powder | | Firing temperature | Average pore diameter | Standard deviation | Bending strength |
|---|---|---|---|---|---|---|---|---|
| | Particle diameter 20 µm | particle diameter 0.5 µm | Particle diameter 3 µm | Content (note) | (°C) | (µm) | (µm) | (MPa) |
| | (kg) | (kg) | (kg) | (% by weight) | | | | |
| Example 1 | 70 | 29 | 1 | 1 | 2200 | 10.5 | 0.78 | 31 |
| Example 3 | 70 | 29 | 1 | 1 | 2250 | 11.5 | 0.98 | 33 |
| Example 4 | 70 | 29 | 1 | 1 | 2300 | 13.5 | 1.18 | 36 |
| Example 2 | 70 | 27 | 3 | 3 | 2200 | 11.0 | 0.74 | 30 |
| Example 5 | 70 | 27 | 3 | 3 | 2250 | 11.5 | 0.76 | 32 |
| Example 6 | 70 | 27 | 3 | 3 | 2300 | 13.5 | 0.68 | 30 |
| Comparative Example 1 | 70 | 30 | 0 | 0 | 2200 | 8.0 | 1.38 | 29 |
| Comparative Example 3 | 70 | 30 | 0 | 0 | 2250 | 12.7 | 1.89 | 32 |
| Comparative Example 4 | 70 | 30 | 0 | 0 | 2300 | 15.1 | 1.77 | 33 |
| Comparative Example 5 | 70 | 27 | 3 | 3 | 1800 | 5.0 | NA | 14 |

| | | | | | | | | |
|---|---|---|---|---|---|---|---|---|
| (Note) Content represents the content of silicon powder to the total amount of silicon carbide powder and silicon powder. NA = Not Available | | | | | | | | |

Fig. 6 is a graph that shows the relationship between a firing temperature, and an average pore diameter and its standard deviation, with respect to Examples 1 and 6 and Comparative Examples 1, 3 and 4.
It has become apparent that in the case where, as shown in Table 2 and Fig. 6, the silicon powder is blended in the raw material composition so as to set the content of silicon powder to 1 to 3% by weight of the total amount of silicon carbide powder and silicon powder and a firing treatment is carried out at a firing temperature of 2200 to 2300°C, it is possible to manufacture a porous silicon carbide sintered body that has an average pore diameter of 10 to 15 µm with reduced fluctuations (standard deviation) and also has a bending strength of more than 30 MPa.

In contrast, it has become apparent that in the case where, as shown in Comparative Examples 1, 3 and 4, no silicon powder is blended in the raw material composition, although a desired pore diameter may be achieved (Comparative Example 3), the pore diameter tends not to become sufficiently large or the pore diameter tends to become too large, and that fluctuations in the pore diameter become large. The reason for this is presumed as described earlier.
Here, even when no silicon powder is blended in the raw material composition, the bending strength is made sufficiently large.
Moreover, when the firing temperature is low as in the case of Comparative Example 5, the pore diameter fails to become sufficiently large, and the bending strength is also small. This is presumably because the sintering process is less likely to proceed.

### (Other Embodiments)

Upon preparing the raw material composition, it is not always necessary to use two kinds of silicon carbide powders having different average particle diameters (D50), but only one kind of silicon carbide powder may be mixed.

The silicon carbide powder to be mixed upon preparing the raw material composition desirably has a purity of 94 to 99.5% by weight.
When the purity of the silicon carbide powder is in the range, it is possible to obtain superior sintering properties upon manufacturing a porous silicon carbide sintered body. On the other hand, when the purity is less than 94% by weight, the progress of sintering of the silicon carbide might be interrupted by impurities, and when the purity is more than 99.5% by weight, the effects of the improved sintering properties are hardly obtained, and although the characteristics of the strength, durability and the like of the manufactured porous silicon carbide sintered body are almost unvaried, it costs more to use such silicon carbide powder with a high purity.

Here, in the present specification, the purity of the silicon carbide powder refers to a weight (% by weight) at which the silicon carbide occupies in the silicon carbide powder.
Normally, even when referred to as silicon carbide powder, the powder contains impurities (inevitable impurities) that are inevitably mixed therein during processes for manufacturing and storing the silicon carbide powder.

The silicon carbide powder may be α-type silicon carbide powder or β-type silicon carbide powder, or may be a mixture of α-type silicon carbide powder and β-type silicon carbide powder; however, α-type silicon carbide powder is desirably used.
Here, α-type silicon carbide powder is more inexpensive than β-type silicon carbide powder, and the application of α-type silicon carbide powder facilitates control of the pore diameter, and is more suitable for manufacturing a porous silicon carbide sintered body having a uniform pore diameter.

A binder to be mixed upon preparing the raw material composition may be any compound as long as it is decomposed at the degreasing treatment temperature.
Examples of the binder include, in addition to methylcellulose, for example, celluloses (decomposition temperature: 350 to 370°C) such as carboxy methylcellulose and hydroxy ethylcellulose, polyethylene glycol (decomposition temperature: 200 to 250°C), and the like. Celluloses are more desirable among these. Since these have a higher water-holding capacity, it is possible to restrain water from oozing from the raw material composition upon carrying out a molding process.

A plasticizer, a lubricant and water to be mixed upon preparing the raw material composition may be mixed therein on demand.
The plasticizer is not particularly limited, and examples thereof include glycerin and the like.
The lubricant is not particularly limited, and examples thereof include polyoxyalkylene-based compounds such as polyoxyethylene alkyl ether and polyoxypropylene alkyl ether, and the like. Specific examples of the lubricant include polyoxyethylene monobutyl ether, polyoxypropylene monobutyl ether, and the like.

Upon preparing the raw material composition, a pore-forming agent may be blended. In particular, in the case where, upon preparing the raw material composition, only one kind of silicon carbide powder is mixed, the pore-forming agent is desirably mixed therein.
Examples of the pore-forming agent include balloons that are fine hollow spheres composed of oxide-based ceramics, spherical acrylic particles, graphite, and the like.

The temperature of the raw material composition thus prepared is desirably 28°C or less. When the temperature is too high, the binder may gel.
Moreover, the moisture content in the raw material composition is desirably 8 to 20% by weight.

Upon cutting the elongated body of the silicon carbide molded body obtained through the extrusion-molding process, instead of using the metal wire, the elongated body of the silicon carbide molded body may be cut by using, for example, a laser or a cutter.
Moreover, a metal wire coated with resin, such as nylon, on the periphery thereof is desirably used as the metal wire.

After the silicon carbide molded body has been manufactured by an extrusion-molding process, it is not always necessary to carry out a drying process, and the drying process may be carried out on demand. Moreover, it may be carried out after a plug material paste has been injected into ends of the cells.
Here, upon carrying out a drying process on the silicon carbide molded body, in addition to a drying apparatus in which microwaves and hot air are used in combination, for example, a microwave drying apparatus, a hot-air drying apparatus, a reduced-pressure drying apparatus, a dielectric drying apparatus, a freeze drying apparatus or the like may be used.

Upon carrying out a degreasing treatment, the bottom plate of the firing jig is also used as a degreasing jig so that after the degreasing treatment, the silicon carbide degreased bodies are not moved individually; however, in the present invention, after the degreasing treatment has been carried out by using another degreasing jig, the resulting silicon carbide degreased bodies may be transferred to be placed on a firing jig 10, as shown in Fig. 3.

In the first and second embodiments, a porous silicon carbide sintered body having a rectangular pillar shape in its outer shape has been manufactured. The outer shape of the porous silicon carbide sintered body to be manufactured by the method for manufacturing the porous silicon carbide sintered body of the present invention is not limited to the rectangular pillar shape, and may be any pillar shape, such as a round pillar shape and a cylindroid shape.

In the first and second embodiments, a porous silicon carbide sintered body having either one of the ends of each cell sealed with a plug has been manufactured. The process for sealing the ends of each cell of the silicon carbide molded body is not necessarily carried out, and may be omitted. In the case where either one of the ends of each cell is sealed with a plug material paste, the finished porous silicon carbide sintered body is suitably used as a filter.
When the sealing process with the plug material paste is omitted, the finished porous silicon carbide sintered body is preferably used as a catalyst supporting carrier used for supporting a catalyst.

The following description will briefly discuss a method for supporting a catalyst on a porous silicon carbide sintered body.
In this method, an alumina film (layer) having a high specific surface area is formed on the surface of a porous silicon carbide sintered body, and a co-catalyst and a catalyst such as platinum are applied to the surface of this alumina film.

First, an alumina film is formed on the surface of a porous silicon carbide sintered body by using a method in which a porous silicon carbide sintered body is impregnated with a solution of a metal compound containing aluminum such as Al(NO₃)₃ and then heated or a method in which a porous silicon carbide sintered body is impregnated with a solution containing alumina powder and then heated.

Next, a co-catalyst is applied to the alumina film by using a method in which the porous silicon carbide sintered body is impregnated with a solution of a metal compound containing a rare-earth element such as Ce(NO₃)₃ and then heated.

Thereafter, a catalyst is applied to the alumina film by using a method in which the porous silicon carbide sintered body is impregnated with a dinitrodiammine platinum nitrate solution ([Pt(NH₃)₂(NO₂)₂] HNO₃ having a platinum concentration of 4.53% by weight) and then heated.
Moreover, examples of the method for applying the catalyst to the porous silicon carbide sintered body include a method in which a catalyst is preliminarily applied to alumina particles and the porous silicon carbide sintered body is impregnated with a solution containing the alumina powder having the catalyst applied thereto and then heated.

The porous silicon carbide sintered body manufactured by the manufacturing method of the present invention can be desirably used as a filter and a catalyst supporting carrier.
Here, in the case where the porous silicon carbide sintered body is used as a filter and a catalyst supporting carrier, an aggregated body formed by combining a plurality of porous silicon carbide sintered bodies with one another by interposing a sealing material layer may be used as a honeycomb structured body. In other words, as shown in Fig. 4, a plurality of silicon carbide sintered bodies are combined with one another to be formed into a honeycomb structured body, and subsequently this may be used. Alternatively, a single porous silicon carbide sintered body may be used as a honeycomb structured body. For example, example of the shape of these honeycomb structured bodies include a round pillar shape, a cylindroid shape, a polygonal pillar shape and the like.

Fig. 4 is a perspective view that schematically shows one example of a honeycomb structured body formed by combining a plurality of silicon carbide sintered bodies with one another.
As shown in Fig. 4, a honeycomb structured body 100 has a structure in which a plurality of porous silicon carbide sintered bodies 110 are combined with one another by interposing a sealing material layer 101 to form a honeycomb block (aggregated body) 103, and a coat layer 102 is formed on the periphery of this honeycomb block 103.

The following description will briefly discuss a method for manufacturing the honeycomb structured body 100 shown in Fig. 4, by using the porous silicon carbide sintered bodies manufactured by the manufacturing method of the present invention.

First, a sealing material paste, made from an inorganic binder, an organic binder, and at least one of inorganic fibers and inorganic particles, is applied to the side faces of the porous silicon carbide sintered bodies 110 with a uniform thickness, and a process in which another porous silicon carbide sintered body is successively stacked on the sealing material paste layer is carried out repeatedly so that an aggregated body of the porous silicon carbide sintered bodies 110 having a predetermined size is manufactured.

Examples of the inorganic binder include silica sol, alumina sol, and the like. Each of these materials may be used alone, or two or more kinds of these may be used in combination. Silica sol is desirable among the inorganic binders.

Examples of the organic binder include polyvinyl alcohol, methyl cellulose, ethyl cellulose, carboxymethyl cellulose, and the like. Each of these may be used alone or two or more kinds of these may be used in combination. Carboxymethyl cellulose is desirable among the organic binders.

Examples of the inorganic fibers include ceramic fibers and the like made from silica-alumina, mullite, alumina, silica, or the like. Each of these may be used alone or two or more kinds of these may be used in combination. Alumina fibers are desirable among the inorganic fibers.

Examples of the inorganic particles include carbides, nitrides, and the like, and specific examples thereof include inorganic powder or the like made from silicon carbide, silicon nitride and boron nitride. Each of these may be used alone, or two or more kinds of these may be used in combination. Out of the inorganic particles, silicon carbide is desirably used due to its superior thermal conductivity.

Moreover, a pore-forming agent such as balloons that are fine hollow spheres comprising oxide-based ceramics, spherical acrylic particles, and graphite may be added to the sealing material paste, if necessary.
The balloons are not particularly limited, and examples thereof include alumina balloons, glass micro-balloons, shirasu balloons, fly ash balloons (FA balloons), mullite balloons, and the like. Alumina balloons are more desirably used among these.

Next, this aggregated body of the porous silicon carbide sintered bodies 110 is heated so that the sealing material paste is dried and solidified to form a sealing material layer 101.
Next, the aggregated body of the porous silicon carbide sintered bodies 110, formed by bonding a plurality of porous silicon carbide sintered bodies 110 to one after another by interposing the sealing material layer 101, undergoes a cutting process by using a diamond cutter or the like so that a round pillar-shaped honeycomb block 103 is manufactured.

Next, a coat layer 102 is formed on the periphery of the honeycomb block 103 by using the sealing material paste.
By using these processes, a honeycomb structured body 100 shown in Fig. 4 can be manufactured.

### BRIEF DESCRIPTION OF THE DRAWINGS

Fig. 1 (a) is a perspective view that schematically shows one example of a porous silicon carbide sintered body to be manufactured by a manufacturing method of the present invention, and Fig. 1 (b) is an A-A line cross-sectional view of Fig. 1 (a).
Fig. 2 (a) is a perspective view that schematically shows one example of a firing jig to be used in a method for manufacturing a porous silicon carbide sintered body of the present invention, and Fig. 2 (b) is an exploded perspective view of the firing jig shown in Fig. 2(a).
Fig. 3 is a partially cut-out perspective view that schematically shows a state in which silicon carbide degreased bodies are placed in the firing jig shown in Fig. 2(a).
Fig. 4 is a perspective view that schematically shows one example of a honeycomb structured body formed by combining a plurality of silicon carbide sintered bodies with one another.
Fig. 5 is a graph that shows the relationship between a content of silicon powder, and an average pore diameter and a bending strength, with respect to Examples 1 and 2 and Comparative Examples 1 and 2.
Fig. 6 is a graph that shows the relationship between a firing temperature, and an average pore diameter and its standard deviation, with respect to Examples 1 to 6 and Comparative Examples 1, 3 and 4.

### EXPLANATION OF SYMBOLS

- 10: Firing jig
- 11: Bottom plate
- 12: Spacer
- 13: Side wall member
- 14: Through hole
- 15: Projected portion
- 100: Honeycomb structured body
- 101: Sealing material layer
- 102: Coat layer
- 103: Honeycomb block
- 110: Porous silicon carbide sintered body
- 111: Cell
- 112: Plug
- 113: Cell wall

## Claims

1. A method for manufacturing a porous silicon carbide sintered body, comprising the steps of:
manufacturing a silicon carbide molded body by using a raw material composition containing at least silicon carbide powder, silicon powder, and a binder;
carrying out a degreasing treatment on said silicon carbide molded body to manufacture a silicon carbide degreased body; and
carrying out a firing treatment on said silicon carbide degreased body to manufacture a porous silicon carbide sintered body,
said raw material composition having 1 to 3% by weight of the total amount of said silicon carbide powder and said silicon powder in a content of said silicon powder, and
said firing treatment being carried out at a temperature allowing silicon carbide powder to mutually form intergranular necks through counter diffusion.

2. The method for manufacturing a porous silicon carbide sintered body according to claim 1,
wherein
said firing treatment is carried out at a firing temperature of 2200 to 2300°C.
